(19) Europäisches Patentamt / European Patent Office / Office européen des brevets

(11) **EP 3 732 635 B1**

(12) **FASCICULE DE BREVET EUROPEEN**

(45) Date de publication et mention de la délivrance du brevet:
**01.03.2023 Bulletin 2023/09**

(21) Numéro de dépôt: **18845307.0**

(22) Date de dépôt: **28.12.2018**

(51) Classification Internationale des Brevets (IPC):
**G06Q 10/06** *(2012.01)* **G06Q 50/26** *(2012.01)*
**G06Q 10/00** *(2006.01)*

(52) Classification Coopérative des Brevets (CPC):
**G06Q 10/20; G06Q 10/06311; G06Q 50/26**

(86) Numéro de dépôt international:
**PCT/FR2018/053562**

(87) Numéro de publication internationale:
**WO 2019/130005 (04.07.2019 Gazette 2019/27)**

(54) **SYSTEME ET PROCEDE DE GESTION DE L'ENTRETIEN AU COURS D'UN RASSEMBLEMENT DE MASSE**

SYSTEM UND VERFAHREN ZUR WARTUNGSVERWALTUNG BEI EINER MASSENANSAMMLUNG

SYSTEM AND METHOD FOR MAINTENANCE MANAGEMENT DURING A MASS GATHERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.12.2017 FR 1763429**

(43) Date de publication de la demande:
**04.11.2020 Bulletin 2020/45**

(73) Titulaire: **BULL SAS**
**78340 Les Clayes-sous-Bois (FR)**

(72) Inventeurs:
• **BENRACHI, Samia**
**92290 Châtenay-Malabry (FR)**
• **MOHIB, Taoufik**
**Riyadh - KSA (SA)**
• **WENSINK, Emmanuel**
**3006 Bern (CH)**

(74) Mandataire: **IPAZ**
**Bâtiment Platon**
**Parc Les Algorithmes**
**91190 Saint-Aubin (FR)**

(56) Documents cités:
WO-A1-2017/021853     US-A1- 2002 113 877
US-A1- 2014 203 909     US-A1- 2014 205 155
US-A1- 2014 236 650

• MANEESHA V RAMESH ET AL: "A Novel Wireless Sensor Network Architecture for Crowd Disaster Mitigation", 2012 8TH INTERNATIONAL CONFERENCE ON WIRELESS COMMUNICATIONS, NETWORKING AND MOBILE COMPUTING (WICOM 2012) : SHANGHAI, CHINA, 21 - 23 SEPTEMBER 2012, IEEE, PISCATAWAY, NJ, 21 septembre 2012 (2012-09-21), pages 1-4, XP032342577, DOI: 10.1109/WICOM.2012.6478356 ISBN: 978-1-61284-684-2
• AKKAYA KEMAL ET AL: "IoT-based occupancy monitoring techniques for energy-efficient smart buildings", 2015 IEEE WIRELESS COMMUNICATIONS AND NETWORKING CONFERENCE WORKSHOPS (WCNCW), IEEE, 9 March 2015 (2015-03-09), pages 58-63, XP032786293, DOI: 10.1109/WCNCW.2015.7122529 [retrieved on 2015-06-11]

EP 3 732 635 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

L'invention concerne le domaine de la gestion de rassemblement de masse, et plus particulièrement un système de gestion de l'entretien pouvant être utilisé dans le cadre d'un rassemblement de masse de façon à organiser le maintien d'un lieu propre et fonctionnel malgré la multitude de participants au rassemblement. L'invention concerne également un procédé de gestion de l'entretien au cours d'un rassemblement de masse capable notamment d'optimiser l'utilisation des ressources disponibles et cela de manière dynamique selon l'usage dudit rassemblement.

## [Art antérieur]

Les grands rassemblements, appelés encore évènements de masse ou rassemblements de masse, sont caractérisés par un grand nombre de personnes assistant ou participant à un évènement commun, par exemple à un pèlerinage, une compétition sportive ou un concert. Avec l'augmentation de la population, de la communication et la démocratisation des transports sur de longues distances, ces grands rassemblements sont de plus en plus fréquents et concernent des personnes de plus en plus nombreuses et diverses.

Les événements susceptibles de rassembler le plus grand nombre de personnes sont souvent des pèlerinages tels que le Hajj qui est le plus grand rassemblement populationnel annuel dans le monde, la Kumbh Mela qui est le plus grand rassemblement d'hindous dans le monde ou encore des messes du pape rassemblant souvent plusieurs millions de personnes. Ainsi, pour l'année 2011, le département central de statistiques et d'information du Royaume d'Arabie Saoudite a recensé près de 3 millions de pèlerins pour le Hajj. Malgré un contrôle exercé par les autorités du Hajj, le nombre de pèlerins sur la période de quelques jours du Hajj dépasse 2,5 millions chaque année. En hausse, il est probable que ce nombre atteigne 10 millions de visiteurs par an dans quelques années. Outre les pèlerinages, les évènements susceptibles de rassembler une foule conséquente sont par exemple les évènements sportifs (e.g. coupe du monde) ou encore les évènements culturels (e.g. exposition universelle). Par exemple, pour les jeux olympiques de 2024 en France, le nombre de spectateurs attendus en moyenne sur une quinzaine de jours est estimé à plus de trois millions dont 500 000 visiteurs étrangers.

La présence d'une quantité importante de personnes participant aux rassemblements de masse entraine généralement une usure des installations avec ponctuellement des dégâts qu'il faut pouvoir réparer sans affecter le déroulement du rassemblement ou tout simplement une consommation des produits mis à disposition qu'il est alors nécessaire de recharger. Les causes de ces désagréments ou dégâts peuvent être très diverses mais sont souvent liées à la quantité de participants. Afin de les compenser au mieux, il est nécessaire de distribuer les bonnes ressources (humaines ou matérielles) rapidement et à un niveau adéquate.

Ainsi, les administrations en charge de l'entretien d'un site associé à un grand rassemblement sont confrontées à une tâche difficile puisqu'une mauvaise administration de leurs ressources peut entrainer des coûts supplémentaires et des nuisances inacceptables pour les participants au rassemblement de masse. En particulier, l'entretien est devenu un sujet stratégique lors du grand pèlerinage à La Mecque (Hajj), avec un nombre de plus en plus important de pèlerins.

Généralement, les techniques les plus utilisées pour la gestion de l'entretien sont des techniques associées à la tenue de planning journalier que les personnels doivent respecter. Néanmoins, une telle gestion n'est pas adaptée à tous les rassemblements et certains rassemblements, notamment les rassemblements de masse, nécessitent une gestion de l'entretien dynamique permettant d'optimiser la distribution des ressources tout en conservant un haut niveau de confort pour les participants. Il existe des techniques automatisées telle que celle décrite dans le document US2014/0236650. Néanmoins, elle ne prend en considération ni les conséquences d'un rassemblement de masse ni les capacités des ressources d'entretien. Ainsi, il existe une difficulté à gérer efficacement les ressources disponibles pour l'entretien d'un site accueillant un rassemblement de masse.

Il existe donc un besoin pour un procédé ou un système permettant d'améliorer la gestion de l'entretien au cours d'un grand rassemblement et notamment d'optimiser l'utilisation des ressources tout en assurant les prérogatives relatives aux mesures d'hygiène et de sécurité et donc un haut niveau de confort pour les participants. Outre ces considérations il est également nécessaire de fournir un procédé ou un système capable de gérer ce dit entretien dynamiquement et en fonction de l'usage des infrastructures du lieu de rassemblement.

## [Problème technique]

L'invention a donc pour but de remédier aux inconvénients de l'art antérieur. En particulier, l'invention a pour but de proposer un système de gestion de l'entretien dans le cadre d'un rassemblement de masse, ledit système permettant de déterminer quel entretien appliquer à quel moment et sur quelle installation et cela de façon rapide et automatisée.

L'invention a en outre pour but de proposer un procédé de gestion de l'entretien dans le cadre d'un rassemblement de masse, accueillant au moins plusieurs milliers de personnes, sur un lieu de rassemblement, ledit procédé pouvant être utilisé pour identifier les actions d'entretien à mener, les classer par ordre de priorité et allouer les ressources nécessaires.

## [Brève description de l'invention]

A cet effet, l'invention porte sur un système de gestion dynamique de l'entretien d'un emplacement géographique au cours d'un rassemblement de masse, ledit emplacement géographique comportant une pluralité d'installations, ledit système étant apte à communiquer avec une pluralité de ressources d'entretien impliquées dans l'entretien de l'emplacement géographique, ledit système comportant une plateforme analytique comprenant :

- un module d'acquisition de données de répartition, apte à calculer une donnée de répartition des participants audit rassemblement se référant à un mouvement de personnes, correspondant à une quantité en entrée et en sortie dudit emplacement géographique ou d'une partie dudit emplacement géographique, à partir de premières données de répartition de participant se référant à une quantité de personnes générées à partir de données de dispositifs d'acquisition d'image et de données de capteurs réseau, et à enregistrer une donnée de répartition des participants audit rassemblement,
- un module de calcul de besoins, apte à déterminer les installations nécessitant une action d'entretien à partir de la donnée de répartition,
- un module de gestion des ressources d'entretien, configuré pour générer une information, de préférence en temps réel, sur la répartition des ressources d'entretien,
- un module de distribution des ressources, configuré pour établir des associations entre les ressources d'entretien et les installations nécessitant une action d'entretien de façon à gérer l'entretien de l'emplacement géographique au cours dudit rassemblement de masse, et
- un module d'analyse, configuré pour générer des données analysées à partir desdites associations de façon à permettre une gestion dynamique de l'entretien de l'emplacement géographique.

Ainsi, l'invention porte sur un système de gestion de l'entretien d'un emplacement géographique au cours d'un rassemblement de masse présentant l'avantage de pouvoir gérer de manière dynamique (e.g. en fonction des besoins réels constaté) et efficacement la distribution des ressources d'entretien à partir de données pouvant être acquises automatiquement, telles qu'une donnée de répartition des participants. Un tel système permet d'optimiser les ressources d'entretien de façon à donner aux participants une haute qualité d'expérience et cela en évitant également le gaspillage des ressources d'entretien.

Un tel système est particulièrement utile dans le cadre de la gestion de l'entretien lors de rassemblements de masse tels que les petits et le grand pèlerinage à La Mecque de façon à maintenir un lieu propre et fonctionnel malgré la multitude de participants au rassemblement.

**Selon d'autres caractéristiques optionnelles du système :**

- le module d'acquisition de données de répartition est en outre apte à calculer la donnée de répartition à partir de premières données de répartition de participant générées à partir de données de dispositifs d'acquisition d'image et de données de capteurs réseau.

- le module de calcul de besoins est configuré pour utiliser des données complémentaires pour déterminer les installations nécessitant une action d'entretien de façon à produire un résultat plus précis sur les installations nécessitant une action d'entretien. Les données complémentaires sont avantageusement sélectionnées parmi : des données de mesure de l'état de l'installation générées par un ou plusieurs capteurs positionnés dans l'installation et configurés pour mesurer l'état de l'installation, des données relatives aux actions d'entretien antérieures stockées sur un module d'enregistrement, des données de seuils d'intervention enregistrées dans un référentiel et/ou des données relatives au rassemblement de masse enregistrées dans un référentiel.

- le ou les capteurs sont sélectionnés parmi : un dispositif de relève de la consommation, un dispositif de relève de l'usure des installations, un dispositif de relève de la propreté des installations, un dispositif de relève de position géographique et un dispositif de relève d'incidents.

- le module de calcul de besoins est configuré en outre pour recevoir des informations d'état d'installations en provenance d'un ou de plusieurs capteurs positionnés dans chacune d'une ou de plusieurs installations, recevoir la donnée de répartition des participants audit rassemblement, et déterminer les installations nécessitant une action d'entretien à partir des informations d'état de d'installations et de la donnée de répartition des personnes.

- le module de calcul de besoins est configuré en outre pour générer une liste comportant l'état de chacune des installations. Le module de calcul de besoins peut également déterminer un horaire auquel chacune des installations aura dépassé un seuil prédéterminé d'intervention. Une telle capacité permet de prévoir les actions d'entretien dans le temps de façon à prévenir toute survenue d'une nuisance pour les participants au rassemblement de masse.

- la plateforme analytique comporte en outre un module de gestion des ressources configuré pour générer une information, de préférence en temps réel, sur la répartition des ressources d'entretien. La possibilité offerte par l'invention de faire cette génération en temps réel, c'est-à-dire par exemple en moins d'une heure, de préférence moins de trente minutes, permet de renforcer l'aspect dynamique et adaptatif du système selon l'invention. Le module de gestion des ressources peut également générer une information sur la compétence des agents d'entretien et/ou les actions d'entretien qui leur ont déjà été attribuées.

- le module de gestion des ressources est configuré en outre pour identifier une période d'inactivité prolongée d'une ressource d'entretien. Une telle capacité permet au système d'optimiser l'utilisation des ressources d'entretien et peut aussi être utilisé pour éviter toutes actions frauduleuses des dites ressources.

- le module de gestion des ressources est en outre configuré pour calculer, en temps réel, un taux de surcharge en ressource d'entretien sur une partie de l'emplacement géographique, ledit module de gestion des ressources étant alors configuré pour :

    - Recevoir une donnée sur la répartition des participants audit rassemblement de masse sur ladite zone,
    - Recevoir une donnée sur la répartition des ressources d'entretien sur ladite zone,
    - Recevoir une donnée sur la capacité d'accueil de ladite zone, et
    - Calculer un taux de surcharge en ressource d'entretien à partir des données de répartition des participants, de répartition des ressources d'entretien et de la capacité d'accueil.

Ainsi, le taux de surcharge est calculé de manière dynamique selon l'usage du dit lieu. Le calcul d'un taux de surcharge permettra entre autre de construire des données statistiques sur ces événements ponctuels et donc de pouvoir prendre des mesures d'anticipation. En outre, suite au calcul du taux de surcharge en ressource d'entretien, le système selon l'invention peut commander l'ouverture de cloisons et/ou l'émission de message d'alerte visant à prévenir un mouvement de foule.

- le module de gestion des ressources est configuré pour recevoir une donnée relative au risque de dépassement de la capacité d'une zone, recevoir une donnée sur la répartition des ressources d'entretien notamment dans ladite zone, et envoyer un message d'alerte sur les dispositifs personnels des agents d'entretien présent dans ladite zone. Ici aussi, le système selon l'invention peut commander l'ouverture de cloisons et/ou l'émission de message d'alerte visant à prévenir un mouvement de foule.

- la plateforme analytique est apte à communiquer avec un dispositif portable d'entretien comprenant un dispositif d'affichage, ledit dispositif portable étant configuré de façon à afficher : au moins une information sur les installations nécessitant une action d'entretien et/ou, un parcours depuis la position actuelle jusqu'à une installation nécessitant une action d'entretien.

- la plateforme analytique comporte en outre un module d'enregistrement apte à enregistrer les données reçues et/ou générées par la plateforme et à apte à gérer une historisation desdites données.

- la plateforme analytique comporte en outre un module d'apprentissage apte à mettre en oeuvre un modèle d'apprentissage supervisé ou non supervisé de façon à générer des données prédictives sélectionnées parmi : des données prédites de répartition de participants audit rassemblement, des données prédites de l'état des installations, des données prédites de besoins en actions d'entretien (c'est-à-dire les installations nécessitant une action d'entretien), des données prédites de position des ressources d'entretien et des données prédites de consommation des ressources.

- Le module d'analyse est configuré pour, à partir des données historisées, générer des données analysées sélectionnées parmi les données analysées suivantes :

    ◦ Liste des actions d'entretien les plus fréquentes ou les plus consommatrices en terme de ressources d'entretien,
    ◦ Liste des installations les plus consommatrices en terme de ressources d'entretien,
    ◦ Répartition réelle ou prédite des participants audit rassemblement en fonction du temps,
    ◦ Besoins réels ou prédits en actions d'entretien en fonction du temps,
    ◦ Position réelle ou prédite des ressources d'entretien en fonction du temps, et
    ◦ Consommations réelles ou prédites des ressources.

Avantageusement, ces données peuvent ensuite être traités par des applications de représentation de façon à mettre en exergue les informations pertinentes (format de type « heat maps ». Ainsi, le module d'analyse est en mesure de générer des données statistiques permettant d'optimiser les actions d'entretien. Il permet également de réduire le gaspillage des ressources. Ces données analysées peuvent également être enregistrée sous forme de fichiers sur une mémoire.

- la plateforme analytique comporte en outre un module de supervision, comprenant un dispositif d'affichage, permettant une supervision temps-réel des ressources d'entretien, et configuré pour afficher : au moins une information sur les installations nécessitant une action d'entretien, les installations qui sont en cours d'entretien, les installations qui ont été entretenues et/ou une liste de ressources d'entretien disponibles

L'invention porte en outre sur un procédé de gestion de l'entretien d'un emplacement géographique, comportant une pluralité d'installations, par une pluralité de ressources d'entretien au cours d'un rassemblement de masse, ledit procédé comportant particulier les étapes suivantes :

- détermination, par un module d'acquisition de données de répartition, d'une donnée de répartition des participants audit rassemblement se référant à un mouvement de personnes, correspondant à une quantité en entrée et en sortie dudit emplacement géographique ou d'une partie dudit emplacement géographique, à partir de premières données de répartition de participant se référant à une quantité de personnes, générées à partir de données de dispositifs d'acquisition d'image et de données de capteurs réseau,
- enregistrement, par un module d'acquisition de données de répartition, d'une donnée de répartition des participants audit rassemblement, la donnée de répartition se référant à un mouvement de personnes,
- détermination, par un module de calcul de besoins, des installations nécessitant une action d'entretien en fonction de la donnée de répartition des participants audit rassemblement, et
- établissement, par un module de distribution des ressources, d'associations entre des ressources d'entretien et les installations nécessitant une action d'entretien.

D'autres avantages et caractéristiques de l'invention apparaitront à la lecture de la description suivante donnée à titre d'exemple illustratif et non limitatif, en référence aux Figures annexées qui représentent :

- Figure 1, une représentation schématique du système de gestion de l'entretien selon l'invention, les éléments en pointillés sont facultatifs.
- Figure 2, une représentation schématique d'un dispositif portable de gestion d'entretien selon l'invention,
- Figure 3, une représentation du procédé de gestion de l'entretien selon l'invention,
- Figure 4, une représentation d'un procédé d'acquisition de la donnée de répartition des participants audit rassemblement,
- Figure 5, une représentation d'une étape de détermination des installations nécessitant une action d'entretien selon l'invention,

- Figure 6, une représentation d'une étape d'établissement d'associations entre des ressources et les installations nécessitant une action d'entretien selon l'invention,
- Figure 7, une représentation d'une étape de mise en oeuvre d'un modèle de correction de la détermination des installations nécessitant une action d'entretien selon l'invention,
- Figure 8, une représentation d'une étape de la mise à jour d'un modèle de correction de la détermination des installations nécessitant une action d'entretien selon l'invention.

**[Description de l'invention]**

Dans la suite de la description, on entend par « emplacement géographique », un lieu pouvant être définie par sa superficie, être constitué par des zones en extérieures et/ou des zones en intérieur et comporter une pluralité d'installations nécessitant un entretien.

Par « installation », on entend au sens de l'invention un bâtiment, un local, un logement mais également un équipement (e.g. distributeur d'eau, meubles).

Par « entretien » ou « action d'entretien », on entend au sens de l'invention une activité visant à réparer, recharger, nettoyer ou remplacer une installation.

On entend par « ressources d'entretien », des personnes, aussi appelées « agent d'entretien » qualifiées pour réaliser des actions d'entretien ou des dispositifs pouvant être nécessaire à la réalisation des actions d'entretien.

Le terme « rassemblement de masse » selon l'invention correspond à un événement planifié ou spontané, de préférence planifié, qui va attirer un nombre de participants susceptible de solliciter considérablement les ressources en matière de planification et d'action des administrateurs ou du pays hôte. Les Jeux olympiques, le Hadj et d'autres événements sportifs, religieux ou culturels majeurs en sont des exemples.

Le terme « répartition » se réfère, selon l'invention, à une quantité ou à un mouvement de personnes. La quantité peut être exprimée selon plusieurs dimensions comme par une densité (e.g. personne/m$^2$), un nombre total (e.g. en centaine de personne), un pourcentage (e.g. nombre de personne / capacité de la zone). Le mouvement correspond à une quantité en entrée et en sortie de l'emplacement géographique ou d'une partie de l'emplacement géographique. Ainsi, la « donnée de répartition » selon l'invention correspond à une ou plusieurs valeurs, par exemple la donnée de répartition se réfère à une quantité de personne ou à un mouvement de personne (flux).

Par « paramètre », on entend au sens de l'invention une valeur obtenue par transformation de données brutes et pouvant être ensuite utilisée au sein d'un modèle. Cela s'applique notamment à la transformation d'une série d'image d'une vidéo ou à la transformation d'une série de valeurs obtenues via un capteur réseau.

Par « seuil prédéterminé d'intervention », on entend au sens de l'invention une valeur prédéterminée de répartition de participants ou de mesure de capteur au-delà de laquelle une action d'entretien est prescrite.

Par « modèle » ou « règle » ou « algorithme » il faut comprendre au sens de l'invention une suite finie d'opérations ou d'instructions permettant de calculer une valeur par l'intermédiaire d'un classement ou d'un partitionnement des données au sein de groupes préalablement définis Y et d'attribuer un score ou de hiérarchiser une ou plusieurs données au sein d'un classement. La mise en oeuvre de cette suite finie d'opérations permet par exemple d'attribuer une étiquette Y à une observation décrite par un ensemble de caractéristiques ou paramètres X grâce par exemple à la mise en oeuvre d'une fonction f susceptible, de reproduire Y ayant observé X.

$$Y = f(X) + e$$

où e symbolise le bruit ou erreur de mesure

Par « méthode d'apprentissage supervisé », on entend au sens de l'invention un procédé permettant de définir une fonction f à partir d'une base de n observations étiquetées $(X_{1...n}, Y_{1...n})$ où $Y = f(X) + e$. Par « méthode d'apprentissage non supervisée », une méthode visant à hiérarchiser les données ou à diviser un ensemble de données en différents groupes homogènes, les groupes homogènes partageant des caractéristiques communes et cela sans que les observations soient étiquetées.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

Dans la suite de la description, les mêmes références sont utilisées pour désigner les mêmes éléments.

L'invention se rapporte à un système ou à un procédé de gestion de l'entretien d'installations pouvant être particulièrement utile dans le cadre d'un rassemblement de masse. Les événements susceptibles de rassembler le plus grand nombre de personnes sont souvent des pèlerinages, des évènements sportifs, des manifestations ou des évènements culturels. La présente invention, bien qu'applicable à de nombreux rassemblement de masse sera illustrée plus particulièrement dans un contexte de pèlerinage à La Mecque, par exemple lors du grand pèlerinage ou du petit pèlerinage. En effet, le pèlerinage à La Mecque représente environ cinq millions de visiteurs chaque année dans les villes de La Mecque et de Médine en Arabie Saoudite. Ces visiteurs se retrouvent en particulier lors du rituel annuel du Hajj qui est effectué sur un nombre précis de jours du mois de Dhul-Hijja de chaque année lunaire, plus particulièrement pendant les 12 premiers jours. En 2017, le premier jour du mois Dhul-Hijja de l'année lunaire 1437 été le 23 août 2017.

Le pèlerinage du Hajj s'étend sur un emplacement géographique correspondant à La Mecque soit plus de 1000 km². Lors de ce pèlerinage, les participants au Hajj, aussi appelés Hadjis vont prier cinq fois par jours dans les mêmes lieux de rassemblement et vont procéder aux mêmes actions de cultes comme expliquées. Ils auront par exemple à faire sept rondes autour de la Kaaba, faire sept fois la marche entre Safâ et Marwah, boire à la source Zamzam puis se rendre au lieu-dit « Mina » à 4 km de La Mecque et faire les prières de l'après-midi (asr), du soir (maghreb et icha) et du matin (fajr). Ils devront également avancer vers la montagne Arafat et y faire la prière de midi et de l'après-midi puis aller vers « Muzdalifah » pour faire les prières du soir. Le lendemain, le pèlerin revient vers Mîna pour y réaliser les rites prescrits soit un parcours d'environ 17km (allée et retour). En outre, les pèlerins visitent généralement la mosquée du Prophète Mohamed (PSSL), Al-Masjid an-Nabawī, à Médine. Ainsi, avec plusieurs millions de pèlerins parcourant ce territoire sur une période très courte et visitant plusieurs sites, les administrations en charge de la gestion de l'entretien des sites sont soumises à une forte pression aux regards de l'hygiène et de la sécurité.

Ainsi, le pèlerinage du Hadj accueille des millions de pèlerins réalisant les mêmes actions au même moment entrainant alors une forte densité de pèlerins et toutes ces actions sont réparties sur seulement quelques jours sur une zone de plusieurs kilomètres carrés. En cela, la gestion d'un tel évènement représente un enjeu exceptionnel notamment en ce qui concerne la gestion de l'entretien de l'emplacement géographique concerné. La présente invention peut alors être particulièrement utile dans ce contexte.

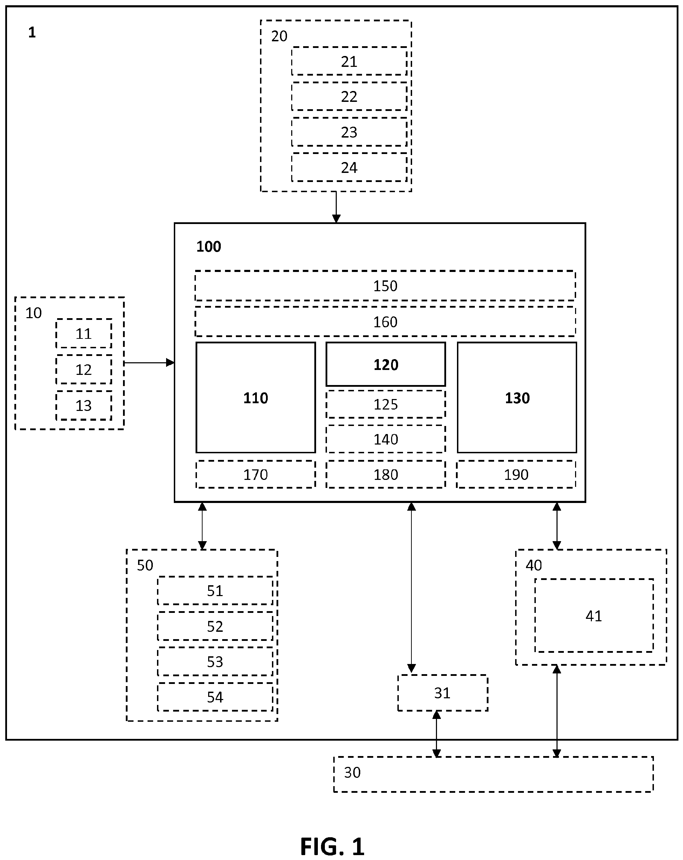

Comme présenté à la **Figure 1**, l'invention porte selon un **premier aspect** sur un **système 1 de gestion de l'entretien d'un emplacement géographique** au cours d'un rassemblement de masse pouvant, de préférence, accueillir au moins plusieurs milliers de personnes, de préférence plus de 100 000 personnes, de façon plus préférée plus d'un million de personnes.

L'emplacement géographique correspond au lieu sur lequel se tient le rassemblement de masse. De façon préférée, l'emplacement géographique est un site de grande superficie nécessitant une administration stricte pour répondre aux exigences des participants en termes de confort. Par exemple, l'emplacement géographique est un territoire de plus de 100 000 m², de façon préférée plus de 200 000 m², de façon plus préférée plus de 500 000 m², de façon encore plus préférée plus de 5 km². L'emplacement géographique dans le cadre de l'invention peut être considéré dans son ensemble mais également divisé en plusieurs parties ou zones.

En outre, l'emplacement géographique comporte une pluralité d'installations. Les installations peuvent par exemple sont sélectionnées parmi : des lieux de culte, des locaux sanitaires, des logements, des parcs, mais également parmi les équipements présents au sein de ces bâtiments ou espaces tels que par exemple des bancs, des tables, des distributeurs (e.g. d'eau) et des tapis. Dans le cadre du pèlerinage de La Mecque, ces installations sont par exemple des lieux ou des structures telles que la Kaaba, Safâ, Marwah, la source Zamzam, le lieu-dit « Mina », Muzdalifah », la mosquée du Prophète Mohamed (PSSL), Al-Masjid Al-Nabawi, à Médine ou encore des équipements tels que des tapis ou distributeurs d'eau. L'emplacement géographique comporte au moins deux installations dont l'entretien est à gérer, par exemple au moins dix installations, de façon préférée au moins vingt installations, de façon plus préférée au moins cinquante installations, et de façon encore plus préférée au moins cent installations. Ainsi, la mise en oeuvre d'un procédé de gestion d'entretien dynamique dans un tel contexte n'est pas comparable aux problématiques classiques d'activités ménagères.

Comme présenté en **figure 1,** le système 1 selon l'invention comporte une plateforme 100 analytique ou plateforme informatique analytique. Cette plateforme 100 analytique est plus particulièrement en charge du traitement des informations, de la planification, de la génération d'instruction et du suivi de l'entretien.

Pour cela, cette plateforme 100 analytique comprend **un module d'acquisition 110 de données de répartition** des participants audit rassemblement, apte à recevoir une donnée de répartition des participants audit rassemblement. Comme déjà mentionné, la donnée de répartition concerne la quantité (ou volume) ou le mouvement des participants pour l'emplacement géographique dans sa globalité ou pour chaque partie (e.g. zone) de l'emplacement géographique. De préférence, la donnée de répartition est obtenue en temps réel ou quasiment en temps réel. Ainsi, la donnée de répartition correspond par exemple à une répartition de la population sur la base de données brutes générées moins d'une heure avant la réception de la donnée de répartition des participants audit rassemblement, de préférence moins de trente minutes, de façon préférée moins de dix minutes et de façon encore plus préférée moins de cinq minutes.

La donnée de répartition des participants audit rassemblement peut être obtenue par tout moyen manuel ou automatisé de dénombrement de personnes. Ainsi, avant sa transmission à la plateforme 100 analytique, la donnée de répartition peut être générée par un dispositif de comptage positionné à l'entrée de chacune des installations, par des dispositifs d'acquisition d'images positionnés au sein de l'emplacement géographique ou encore par des capteurs réseau aptes à acquérir des donnés de communications sans fil.

De façon préférée, la plateforme 100 analytique comporte en outre un dispositif de calcul 10 d'une donnée de répartition des participants audit rassemblement, ledit dispositif comportant :

- un module d'acquisition de données, apte à acquérir des premières données de répartition des participants générées à partir de données provenant de la pluralité de dispositifs d'acquisition d'images et à acquérir des premières données de répartition des participants générées à partir de données provenant de la pluralité de capteurs réseau, et
- un module de traitement de données apte, à partir des premières données de répartition acquises, à calculer sur la base d'un modèle de correction par apprentissage supervisé ou non supervisé, une donnée de répartition des participants audit rassemblement.

Il existe un fort taux d'erreur dans l'estimation de la répartition des participants à un rassemblement de masse lorsque la répartition est estimée avec les méthodes automatisées connues de l'art antérieur (caméra, RFID...). Le dispositif 10 permet d'obtenir une donnée de répartition bien plus proche des valeurs réelles de répartition que les premières données de répartition acquises.

La plateforme 100 analytique comprend également un **module 120 de calcul de besoins** apte à déterminer les installations nécessitant une action d'entretien. Les actions d'entretien sont de façon générale toutes les activités visant à assurer le bien-être et le confort de participants à un rassemblement de masse et plus particulièrement au pèlerinage du Hadj. De façon préférée, les actions d'entretien sont sélectionnées parmi : les actions de nettoyage (e.g. d'équipements, de sols), de rechargement de consommables et de remplacement. Chaque installation peut bénéficier de plusieurs actions d'entretien différentes.

La détermination des installations nécessitant une action d'entretien est réalisée notamment en fonction de la donnée de répartition des participants audit rassemblement obtenue *via* le module d'acquisition 110. Néanmoins, comme cela sera présenté dans la suite, le module 120 de calcul de besoins est avantageusement apte à utiliser des données complémentaires de façon à produire un résultat plus précis sur les installations nécessitant une action d'entretien.

Pour cela, le module 120 de calculs de besoins est notamment configuré pour communiquer avec : le module 130 de distribution des ressources, un module de gestion de ressources d'entretien 140, un référentiel 50, un module d'enregistrement 150, un module d'apprentissage 160, un module de visualisation 170 et un module de communication 180.

La plateforme 100 analytique comprend également un **module 130 de distribution des ressources,** configuré pour établir des associations entre des ressources et les installations nécessitant une action d'entretien.

Par exemple, lesdites associations peuvent prendre la forme d'un fichier de données stipulant quelle ressource d'entretien doit intervenir sur quelle installation. De façon préférée, ladite association comporte également l'heure d'intervention souhaitée ainsi que sa durée.

Pour cela, le module 130 de distribution des ressources est notamment configuré pour communiquer avec : le module 120 de calcul de besoins, un module de gestion de ressources d'entretien 140, un référentiel 50, un module d'enregistrement 150, un module d'apprentissage 160, un module de visualisation 170 et un module de communication 180.

Comme mentionné, la plateforme 100 analytique peut comporter un **module de gestion 140 des ressources d'entretien** qui est apte à communiquer avec les ressources d'entretien 30 et à enregistrer les données de disponibilité des ressources d'entretien. Le module de gestion 140 des ressources d'entretien est avantageusement apte à mettre à jour ces données en temps réel.

Ainsi, le module de gestion 140 des ressources d'entretien est avantageusement configuré pour faire un suivi en temps réel de la position et donc des mouvements des ressources d'entretien. Cela peut par exemple permettre d'identifier des ressources d'entretien disponibles pour des actions d'entretien ou des ressources d'entretien sous-utilisées.

Ainsi, le module de gestion 140 des ressources d'entretien est avantageusement configuré pour recevoir une information sur la position des agents d'entretien. Il peut en outre être apte à envoyer un message d'alerte aux agents d'entretien, par exemple via le dispositif portable d'entretien 40 lors d'une nouvelle action d'entretien à mener ou lors de l'identification d'une période de temps sans mouvement.

Le module de gestion 140 des ressources d'entretien peut aussi être configuré pour identifier un engorgement d'une partie de l'emplacement géographique et générer un message d'alerte. En effet, si les agents d'entretien ou plus largement les ressources d'entretien sont concentrés sur une zone cela risque de créer un engorgement.

Enfin, le module de gestion 140 des ressources d'entretien est apte à enregistrer certaines informations spécifiques sur les ressources d'entretien telles que : leur position, les compétences pour les agents d'entretien et la planification d'actions pour chacune des ressources d'entretien.

En outre, la plateforme 100 analytique peut comporter un **module d'enregistrement 150** apte à enregistrer les données reçues ou générées par la plateforme. Le module d'enregistrement 150 peut comprendre une mémoire transitoire et/ou une mémoire non transitoire. La mémoire non transitoire peut être un support tel qu'un CDrom, une carte mémoire, ou un disque dur par exemple hébergé par un serveur distant. Le module d'enregistrement 150 est en outre apte à gérer une historisation des données reçues ou générées par la plateforme 100 analytique. Avantageusement, le module d'enregistrement 150 présente une architecture de type LAMBDA, KAPPA ou Architecture SMACK.

En outre, la plateforme 100 analytique peut comporter un **module d'apprentissage 160** apte à mettre en oeuvre des algorithmes basés sur des méthodes d'apprentissage supervisé ou non supervisé. Ainsi, avantageusement, la plateforme 100 analytique est configurée pour mettre en oeuvre les données d'entrées dans un ou plusieurs algorithmes, de préférence préalablement calibrés. Ces algorithmes sont par exemple sélectionnés parmi un algorithme calcul de la donnée de répartition, un algorithme de calcul de besoin, et un algorithme de distribution de ressources. En outre, ces algorithmes peuvent présenter différentes versions en fonction du temps d'une période du rassemblement. Par exemple, dans le cadre du pèlerinage, trois périodes peuvent être prises en compte : le Hadj ou grand pèlerinage, le petit pèlerinage et le reste de l'année. Cela permet d'affiner les prédictions issues des modèles.

Ces algorithmes peuvent avoir été construit à partir de différents modèles d'apprentissage, notamment de partitionnement, supervisés ou non supervisés. Un algorithme d'apprentissage non supervisé peut par exemple être sélectionné parmi un modèle de mélange Gaussien non supervisé, une classification ascendante hiérarchique (Hierarchical clustering Agglomerative en terminologie Anglo-Saxonne), une classification descendante hiérarchique (Hierarchical clustering divisive en terminologie Anglo-Saxonne). Alternativement, l'algorithme repose sur un modèle d'apprentissage statistique supervisé configuré de façon à minimiser un risque de la règle d'ordonnancement et ainsi permettant d'obtenir des règles de prédiction plus performantes. Dans ce cas, les étapes de calcul de détermination et d'estimations peuvent être basées sur un modèle, entrainé sur un jeu de données et configuré pour prédire une étiquette. Par exemple, aux fins de la calibration, il est possible d'utiliser un jeu de données représentatif d'une situation dont l'étiquette est connue, par exemple de la forme « bon état » / « mauvais état ». Le jeu de donnée peut également comprendre des étiquettes multiples. L'algorithme peut être issu de l'utilisation d'un modèle d'apprentissage statistique supervisé sélectionné par exemple parmi les méthodes à noyau (e.g. Séparateurs à Vaste Marge - Support Vector Machines SVM, Kernel Ridge Regression) décrites par exemple dans Burges, 1998 (Data Mining and Knowledge Discovery. A Tutorial on Support Vector Machines for Pattern Recognition), les méthodes d'ensembles (e.g. arbres de décision) décrites par exemple dans Brieman, 2001 (Machine Learning. Random Forests), ou les réseaux de neurones décrits par exemple dans Rosenblatt, 1958 (The perceptron: a probabilistic model for information storage and organization in the brain).

En outre, la plateforme 100 analytique peut comporter **un module de supervision 170** comprenant un dispositif d'affichage configuré pour afficher : au moins une information sur les installations nécessitant une action d'entretien, les installations qui sont en cours d'entretien, les installations qui ont été entretenues et/ou une liste de ressources d'entretien disponibles.

En outre, la plateforme 100 analytique peut comporter **un module de communication 180.** Grâce à ce module de communication, la plateforme 100 est apte à communiquer avec une pluralité de ressources d'entretien 30 impliquées dans l'entretien de l'emplacement géographique. Les ressources d'entretien peuvent par exemple être sélectionnées parmi : des véhicules, des dispositifs de nettoyage (e.g. robots aspirateurs), et des agents d'entretien. Le module de communication 180 est configuré pour recevoir et transmettre des informations à des systèmes distants tels que des capteurs, des tablettes, des téléphones, des ordinateurs ou des serveurs. Le module de communication permet de transmettre les données sur au moins un réseau de communication et peut comprendre une communication filaire ou sans fil. De préférence, la communication est opérée par l'intermédiaire d'un protocole sans fils tel que wifi, 3G, 4G, et/ou Bluetooth. Ces échanges de données peuvent prendre la forme d'envoi et de réception de fichiers, de préférence cryptés et associés à une clé spécifique de receveur. Le module de communication 180 est en outre apte à permettre la communication entre la plateforme 100 et un terminal distant, dont un client. Le client est généralement, tout matériel et/ou logiciel susceptible d'accéder à la plateforme 100 analytique.

La plateforme 100 analytique peut avantageusement comporter **un module de d'analyse 190** configuré pour générer des données analysées sélectionnées parmi : la répartition des participants audit rassemblement en fonction du temps, les besoins en entretien en fonction du temps, la répartition des ressources d'entretien en fonction du temps, la consommations des ressources, et la liste des actions d'entretien les plus fréquentes ou les plus consommatrices en terme de ressources d'entretien. Ces fichier sont de façon préférée générés à partir de données historisées. Ces fichiers peuvent ensuite être traités par des applications de représentation de façon à mettre en exergue les informations pertinentes (format de type « heat maps ». Ainsi, le module d'analyse 190 est en mesure de générer des données statistiques permettant d'optimiser les actions d'entretien. Il permet également de réduire le gaspillage des ressources.

Les différents modules de la plateforme 100 sont représentés de façon distincte sur la figure 1 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique. En outre, lorsque l'on prête une action à un dispositif ou un module, celle-ci est en fait effectuée par un microprocesseur du dispositif ou module commandé par des codes instructions enregistrés dans une mémoire. De même, si l'on prête une action à une application, celle-ci est en fait effectuée par un microprocesseur du dispositif dans une mémoire duquel les codes instructions correspondant à l'application sont enregistrés. Lorsqu'un dispositif ou module émet ou reçoit un message, ce message est émis ou reçu par une interface de communication.

Comme présenté à la figure 1, le système selon l'invention peut comporter un ou plusieurs capteurs 20 positionnés au niveau d'une installation et configurés pour mesurer la propreté de l'installation et/ou de l'état des équipements dans l'installation. Ces capteurs 20 peuvent par exemple être sélectionnés parmi :

- un dispositif de relève de l'usure 21 des installations. Ainsi, il est possible de suivre de façon automatique l'usure des installations et par exemple l'usure des tapis dans le cadre du pèlerinage de La Mecque ;
- un dispositif de relève de la consommation 22 des consommables. Les consommables peuvent par exemple être des gobelets et des bonbonnes d'eau ;
- un dispositif de relève de propreté des installations 23. Par exemple, des capteurs de poussière peuvent être installés dans les Mosquées de La Mecque de façon à être informé rapidement du dépôt de poussière à un niveau tel qu'une intervention est nécessaire ;
- un dispositif de relève d'incidents 24 permettant via un signal extérieur, généré manuellement ou automatiquement, de prévenir d'un incident qu'il sera ensuite évaluer de façon à déterminer si l'envoi d'une équipe d'entretien est nécessaire ;

- un dispositif de relève de position géographique.

Le système selon l'invention est apte à communiquer avec une pluralité de ressources d'entretien 30. Dans le cadre de l'invention, la pluralité de ressources d'entretien correspond à au moins deux ressources d'entretien, par exemple au moins dix ressources d'entretien, de façon préférée au moins vingt ressources d'entretien, de façon plus préférée au moins cinquante ressources d'entretien, et de façon encore plus préférée au moins cent ressources d'entretien. Ainsi, la mise en oeuvre d'un procédé de gestion d'entretien dans un tel contexte n'est pas comparable aux problématiques classiques d'activités ménagères. En outre, bien que le système ne couvre pas les ressources d'entretien 30, le système selon l'invention peut comporter un ou plusieurs dispositifs de relève 31 de la position de chacune des ressources d'entretien 30. Ces dispositifs comportent par exemple des puces RFID (pour « Radio Frequency IDentification » en terminologie anglo-saxonne), Bluetooth, GNSS (pour « Global Navigation Satellite System » en terminologie anglo-saxonne) et/ou GSM (pour « Global System for Mobile Communications » en terminologie anglo-saxonne).

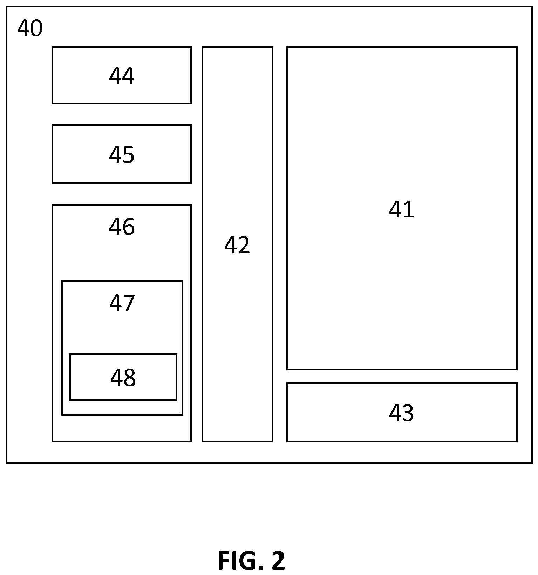

Avantageusement, les agents de nettoyage peuvent disposer d'un dispositif portable de gestion de l'entretien 40 tel qu'illustré sur la **figure 2.** Le dispositif portable de gestion de l'entretien 40 comporte un module d'affichage 41 lui permettant par exemple d'afficher les instructions associées aux actions d'entretien, un processeur 42 et une mémoire 43. Il peut en outre comporter une puce de géolocalisation 44 de type GNSS (incluant GPS), un accéléromètre 45, et une puce de communication GSM 46 associée à une carte SIM 47 étant de préférence fixée de manière inamovible au dispositif (e.g. soudée) et comportant une mémoire 48 de préférence cryptée.

Comme présenté à la figure 1, le système selon l'invention peut comporter un référentiel 50 pouvant être modifié par des tiers, de préférence par des tiers autorisés et authentifiés. Ce référentiel 50 peut comporter différentes données 51, 52, 53, 54 pouvant être utilisées par la plateforme informatique 100 pour gérer l'entretien. Ces données sont par exemple relatives à des seuils prédéterminés d'intervention pour capteurs 51, des seuils prédéterminés d'intervention pour la donnée de répartition 52, des données sur les ressources d'entretien 53, des données sur le rassemblement de masse 54 (e.g. durée, nombre de personnes estimées) ou encore des données sur les installations (e.g. durée d'intervention moyenne, fréquence d'intervention). Le référentiel 50 peut aussi être un serveur distant. Il est par exemple possible d'accéder à ce serveur distant via une interface web ou directement via les fonctions appropriées directement implémentées sur un dispositif de commande.

Toutes les communications entre la plateforme 100 et le serveur distant peuvent être sécurisées par exemple par des protocoles HTTPS et cryptage AES 512.

En outre, le système selon l'invention peut comporter une ou plusieurs interfaces homme-machine. L'interface homme-machine, au sens de l'invention, correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

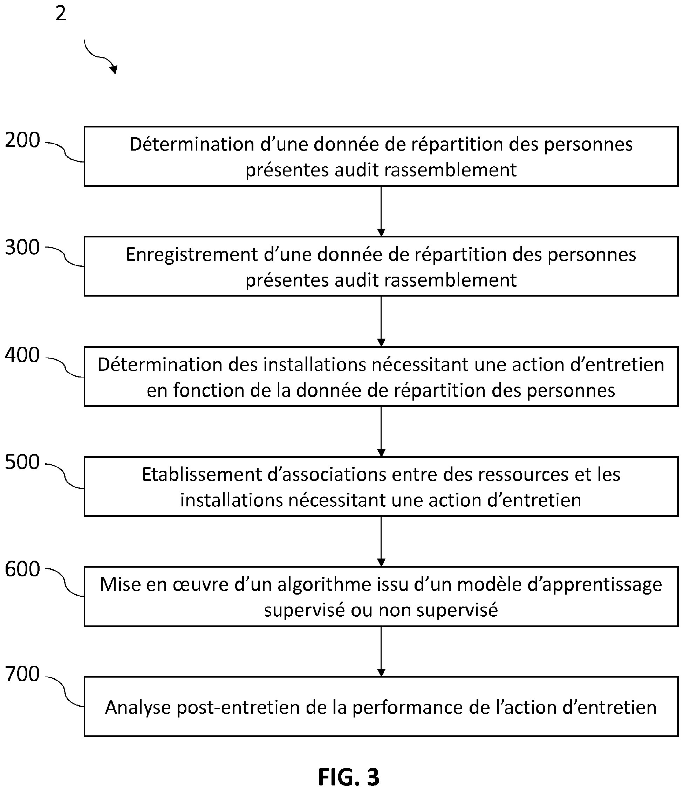

Selon **un autre aspect,** l'invention porte sur un **procédé de gestion 2 de l'entretien** d'un emplacement géographique, comportant une pluralité d'installations, au cours d'un rassemblement de masse. Les étapes du procédé sont représentées sur la figure 3. Le procédé selon l'invention comporte en particulier les étapes suivantes :

- Enregistrement 300, par un module d'acquisition 110 de données de répartition, d'une donnée de répartition des participants audit rassemblement,
- Détermination 400, par un module de calcul 120 de besoins, des installations nécessitant une action d'entretien en fonction de la donnée de répartition des participants audit rassemblement, et
- Etablissement 500, par un module de distribution 130 des ressources, d'associations entre des ressources d'entretien 30 et les installations nécessitant une action d'entretien.

L'enregistrement 300 d'une donnée de répartition des participants audit rassemblement peut être basé sur des données provenant de dispositifs extérieurs à la plateforme 100 analytique et cette donnée de répartition peut être générée par la plateforme 100 analytique. En particulier, cette étape d'enregistrement 300 d'une donnée de répartition des personnes peut être précédée par une étape 200 de détermination d'une donnée de répartition des participants audit rassemblement.

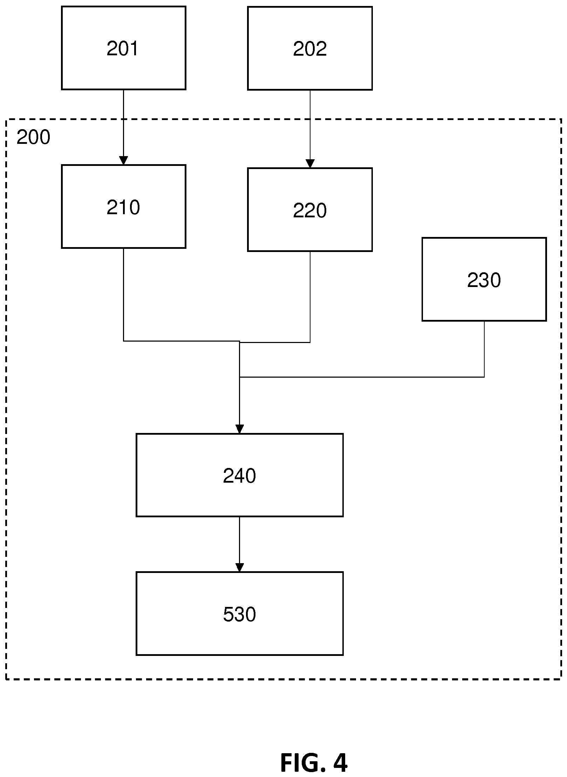

La figure 4 représente une étape 200 de détermination d'une donnée de répartition des participants audit rassemblement selon un mode de réalisation. Cette détermination est initié par les acquisitions 201 et 202 de données de répartition générées à partir de données provenant respectivement de la pluralité de dispositifs d'acquisition d'images 10 et de la pluralité de capteurs réseau 20.

Ces données sont ensuite chargées en mémoire 210 et 220 par le module de calcul de répartition qui charge 230 également en mémoire un modèle d'apprentissage de façon à pouvoir mettre en oeuvre une étape de calcul 240 permettant la génération des données de répartitions qui pourront ensuite être enregistrée 250.

La détermination 400 des installations nécessitant une action d'entretien en fonction de la donnée de répartition des participants audit rassemblement est de préférence réalisée en temps réel.

L'établissement 500 d'associations entre des ressources et les installations nécessitant une action d'entretien est de préférence réalisé en temps réel.

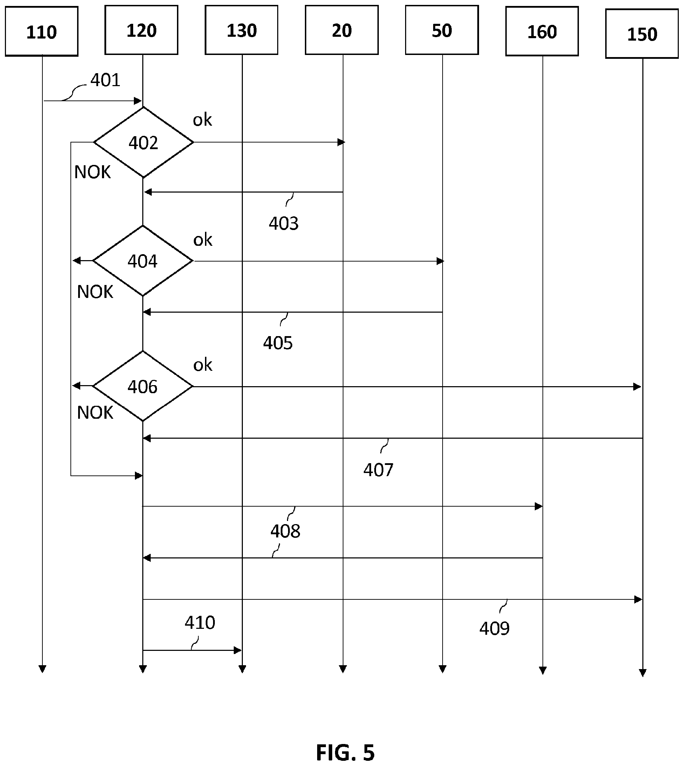

La **figure 5** est un diagramme illustrant les échanges entre divers éléments du système décrits ci-dessus pouvant avoir lieu notamment lors de l'étape de détermination 400 des installations nécessitant une action d'entretien en fonction de la donnée de répartition des participants audit rassemblement.

Dans la figure 5, on retrouve des éléments de la plateforme 100 tels que le module d'acquisition de données 110, le module de calcul de décisions 120 et le module de distribution 130 des ressources ainsi que le module d'enregistrement 150 et le module d'apprentissage 160. Cette figure représente également des éléments extérieurs à la plateforme 100 tels que les capteurs 20 et les référentiels 50.

Lors d'une première étape 401, le module 120 reçoit du module 110 une donnée de répartition des participants audit rassemblement. Lorsque le module 120 reçoit cette donnée de répartition, une vérification est effectuée lors de l'étape 402 pour détecter la présence de capteurs 20 associés aux installations. Ces capteurs 20 sont en particulier configurés de façon à mesurer l'état de l'installation. Si des capteurs sont détectés (OK), les données de capteurs sont réceptionnées 403 par le module 120. Lors de l'étape 404, le module 120 peut déterminer si des seuils prédéterminé d'intervention (relatifs à la donnée de répartition et/ou aux données de capteurs) sont enregistrés dans le référentiel 50 pour les valeurs de capteurs 20 pris en compte. Si tel est le cas (OK), ces valeurs seuils sont prises en compte 405 de façon à interpréter les valeurs issues des capteurs. Ainsi, si une valeur de capteur 20 dépasse un seuil prédéterminé d'intervention alors le module de calcul 120 de besoin pourra déterminer que l'installation nécessite une action d'entretien. Lors de cette étape 404 d'interrogation du référentiel 50, le module 120 peut également déterminer si le référentiel comporte des données sur le rassemblement de masse telles que par exemple des données relative à des événements futurs qui nécessiteraient une mise en conformité de certaines installations avant une certaine date ou encore l'interdiction d'action d'entretien sur certaines plages horaires.

Lors de l'étape 406, le module 120 peut interroger le module d'enregistrement 150 de façon à obtenir des données relatives aux actions d'entretien antérieures. Cela peut par exemple être la date de la dernière action d'entretien par installation. Si de telles données sont disponibles (OK), alors les données sont acquises 407 par le module 120.

Ainsi, bien que la détermination des installations nécessitant une action d'entretien puisse être réalisée en fonction de la donnée de répartition des participants audit rassemblement, le module 120 de calcul de besoins est avantageusement apte à utiliser des données complémentaires de façon à produire un résultat plus précis sur les installations nécessitant une action d'entretien. Ces données complémentaires peuvent par exemple être :

- des données de capteurs 20, les capteurs étant de préférence configurés de façon à mesurer l'état (e.g. la propreté) de l'installation,
- des données relatives aux actions d'entretien antérieures (e.g. l'heure de fin du dernier nettoyage). Pour cela, le module de calcul 120 de besoins est capable de communiquer avec un module d'enregistrement 150 de façon par exemple à extraire les valeurs d'entretien antérieures.
- des données de seuils prédéterminés d'intervention enregistrées dans un référentiel 50. Les données du référentiel 50 peuvent être modifiées via une interface homme-machine.
- de données relatives au rassemblement de masse, notamment au nombre de personnes inscrites, enregistrées dans un référentiel. Par exemple, dans le cadre du pèlerinage du Hajj, les données complémentaires peuvent correspondre au nombre de visa délivrés.

Suite aux étapes 403, 405, 407, correspondant à des étapes d'acquisition de données complémentaires pouvant être utiles à la détermination des installations nécessitant une action d'entretien, le procédé comporte une étape 408 correspondant à la mise en oeuvre, par le module 120 en combinaison avec le module d'apprentissage 160, d'un algorithme de détermination des installations nécessitant une action d'entretien. Cette étape peut également être mise en oeuvre sur la seule base de la donnée de répartition des personnes si aucune donnée complémentaire n'a été acquise (NOK).

Comme déjà présenté, le module de calcul de décisions 120 est capable de déterminer les installations nécessitant une action d'entretien et cela en fonction de la donnée de répartition des participants. En outre, il est avantageusement apte à :

- générer une liste comportant l'état de chacune des installations qui pourra être affiché dans un dispositif d'affichage. L'état peut prendre une valeur alphanumérique et permet d'apprécier la nécessité d'initier une action d'entretien sur chacune des installations. Par exemple, l'état peut correspondre à une valeur binaire : installation propre - installation sale. Néanmoins, l'état peut également être une valeur chiffrée établissement par exemple une estimation de l'état d'usure d'une installation ;
- déterminer une plage horaire à laquelle l'installation aura dépassé un seuil prédéterminé d'intervention.

Cette détermination est avantageusement réalisée à partir des données de répartition des personnes ; et/ou

- enregistrer 409 les données d'installations nécessitant une action d'entretien en fonction du temps. Ces données pourront ensuite être utilisées pour améliorer les prédictions et recommandation formulée par la plateforme 100 analytique ou encore pour faire des rapports.

Une fois la détermination réalisée, le module 120 peut, lors d'une étape 410, transmettre ces données au module de distribution 130 des ressources.

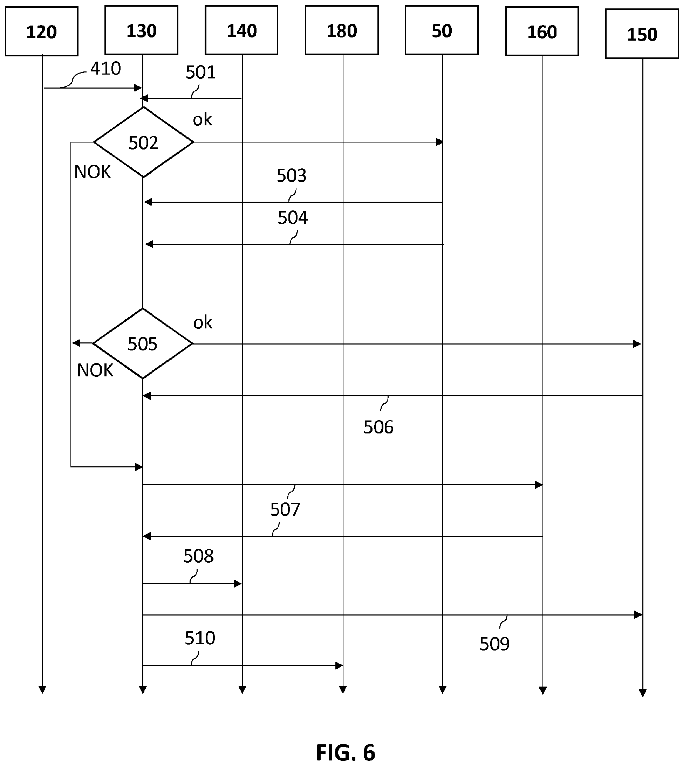

La **figure 6** est un diagramme illustrant les échanges entre divers éléments du système décrits ci-dessus pouvant avoir lieu notamment lors de l'étape d'établissement 500 d'associations entre des ressources d'entretien et les installations nécessitant une action d'entretien.

Dans la figure 6, on retrouve des éléments de la plateforme 100 tels que le module de calcul de décisions 120, le module de distribution 130 des ressources et le module de gestion des ressources 140, ainsi que le module d'enregistrement 150, le module d'apprentissage 160 et le module de communication 180. Cette figure représente également des éléments extérieurs à la plateforme 100 tels que les référentiels 50.

Dans un premier temps, le module 130 reçoit du module 120, au cours d'une étape 410, des données sur les installations nécessitant une action d'entretien et, au cours d'une étape 501, du module de gestion 140 des ressources, des données sur les ressources d'entretien.

Les données sur les ressources d'entretien reçues par le module 130 peuvent être avantageusement sélectionnées parmi :

- Une information en temps réel de la position des ressources d'entretien de façon à identifier des ressources disponibles pour des actions d'entretien en fonction de leur position ; et/ou
- Une information en temps réel sur la compétence des agents d'entretien et de façon préférée les actions d'entretien qui leur ont déjà été attribuées par exemple dans la journée ;
- Une information en temps réel de la durée d'immobilité. L'immobilité peut être ici considérée comme étant un déplacement inférieur à 10 mètres, de préférence inférieure à 5 mètres. Cela permet d'identifier des ressources disponibles pour des actions d'entretien en fonction de leur activité. En effet, une immobilité de plus de 1 minute, de préférence de plus de 5 minutes et de façon plus préférée de plus de 10 minutes peut être considéré comme une inactivité,
- Une information en temps réel sur un risque pour la zone où se trouve la ressource d'entretien de créer un goulot d'étranglement. Ainsi, si des agents d'entretien observent cette information sur un dispositif électronique de communication ils pourront oeuvrer pour prévenir ce goulot d'étranglement.

Lors de l'étape 502, le module 130 peut interroger le référentiel 50. Si l'accès à un référentiel 50 est confirmé lors d'une étape 502, lors d'une étape 502 d'interrogation du référentiel 50, le module 130 peut également déterminer si le référentiel 50 comporte des données sur le rassemblement de masse telles que par exemple des données relatives à des événements futur qui empêcherait l'intervention des agents de nettoyage sur certaines périodes. Si tel est le cas, ces données sont transmises 503 au module 130. Le référentiel 50 peut également comprendre des données de référence sur les besoins des installations en entretien tels que par exemple la durée classique des actions d'entretien pour chacune des installations ou encore les compétences nécessaires pour les différentes actions d'entretien qui pourront être prises en compte 504 par le module 130. Avantageusement, ces données pourront être modifiées, en fonction des données mesurées au cours du rassemblement de masse, automatiquement par le module d'apprentissage 160 ou encore manuellement via une interface homme-machine. Une telle possibilité d'apprentissage supervisé permet d'améliorer la justesse de la production et d'optimiser l'utilisation des ressources d'entretien.

Lors de l'étape 505, le module 130 peut interroger le module d'enregistrement 150 de façon à obtenir des données relatives aux actions d'entretien en cours. Cela peut par exemple être la date de la dernière action d'entretien par installation. Si de telles données sont disponibles (OK), alors les données sont acquises 506 par le module 130.

Suite aux étapes 503, 504 et 506, correspondant à des étapes d'acquisition de données complémentaires pouvant être utiles à la distribution des ressources d'entretien, le procédé comporte une étape 507 correspondant à la mise en oeuvre, par le module 130 en combinaison avec le module d'apprentissage 160, d'un algorithme de distribution des ressources d'entretien. Cette étape peut également être mise en oeuvre sur la seule base de des données de ressources d'entretien et des installations nécessitant une action d'entretien si aucune donnée complémentaire n'a été acquise (NOK).

Comme déjà présenté, le module de distribution 130 des ressources d'entretien est capable d'établir des associations entre des ressources d'entretien et les installations. En outre, il est avantageusement apte à :

- générer une liste de vérification pour chacune de la pluralité d'installations, la liste de vérification comprenant au moins un état de l'installation et/ou de l'équipement dans l'installation ;
- mise à jour 508 des plannings dans le module de gestion de ressources avec une durée estimée de réalisation de l'action d'entretien ;
- enregistrer 509 les données de distribution des ressources en fonction du temps. Ces données pourront ensuite être utilisées pour améliorer les prédictions et recommandation formulée par la plateforme 100 analytique ou encore pour faire des rapports ; et/ou

- notifier 510 les agents d'entretien en réponse à la détermination d'une ou de plusieurs installations nécessitant une action d'entretien. Comme présenté aux figures 1 et 2, la plateforme 100 est apte à communiquer avec un dispositif portable 40 d'entretien comprenant un dispositif d'affichage 41, de façon à ce qu'il affiche : au moins une information sur les installations nécessitant une action d'entretien et/ou un parcours depuis la position actuelle jusqu'à une installation nécessitant une action d'entretien.

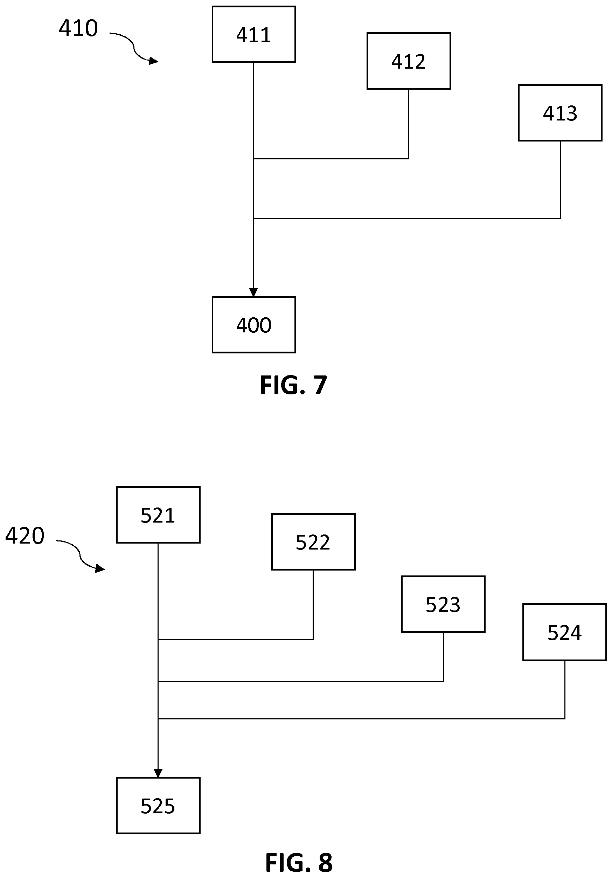

Comme cela a été mentionné, le procédé selon l'invention peut avantageusement comprendre une étape 600 de mise en oeuvre d'un algorithme issu d'un modèle d'apprentissage supervisé ou non supervisé, comme par exemple un algorithme de distribution des ressources ou un algorithme de détermination de besoins. Ce dernier peut par exemple comprendre l'attribution d'un score à chacune des installations en fonction des données utilisées lors de la mise en oeuvre de l'algorithme. Le score peut par exemple être un score représentatif d'une caractéristique du niveau d'usure, de quantité, de propreté. La mise en oeuvre d'algorithme de détermination de besoins peut comprendre le classement de chacune des installations en catégories. Par exemple, le procédé peut permettre d'associer chaque installation à une catégorie telle que « installation propre», « installation sale », « installation à nettoyer dans l'heure », « installation à rechargée ». **La figure 7** présente la mise en oeuvre 410 d'un tel algorithme de détermination de besoins par le module d'apprentissage 160. Comme cela est présenté, le module d'apprentissage lors d'une étape 411 acquière la donnée de répartition à un instant t, puis acquière 412 les données de capteurs à un instant t et enfin charge 413 l'algorithme de détermination de besoins de façon à déterminer 400 les installations nécessitant une action d'entretien.

En outre, comme cela est présenté en **figure 8**, le procédé selon l'invention peut avantageusement comporter une étape de mise à jour des algorithmes de distribution des ressources ou de détermination de besoins. La figure 8 présente la mise en oeuvre 420 d'une mise à jour d'un algorithme de détermination de besoins par le module d'apprentissage 160. Comme cela est présenté, le module d'apprentissage lors d'une étape 421 charge une pluralité de données de répartition correspondant à des données de répartition acquise lors d'une période antérieure, puis charge 422 les données de capteurs acquises lors de cette période antérieure et avantageusement il peut également charger des données d'alertes générées lors de cette période antérieure. Ensuite, de façon facultative, il charge 423 l'algorithme de détermination de besoins actuel. Enfin, le module d'apprentissage met en oeuvre 424 un modèle d'apprentissage supervisé ou non supervisé de façon à déterminer, au plus juste, un nouvel algorithme de détermination de besoins.

Le procédé selon l'invention peut comprendre en outre une étape d'analyse post-entretien 700 de la performance de l'action d'entretien. Une telle étape, mise en oeuvre par exemple par un module de contrôle de performance, peut permettre de vérifier, notamment grâce à la présence de capteurs 20, si l'action d'entretien a été menée efficacement.

**Revendications**

1. Système (1) de gestion dynamique de l'entretien d'un emplacement géographique au cours d'un rassemblement de masse, ledit emplacement géographique comportant une pluralité d'installations, ledit système étant apte à communiquer avec une pluralité de ressources d'entretien (30) impliquées dans l'entretien de l'emplacement géographique, ledit système (1) comportant une plateforme (100) analytique comprenant :

   - un module d'acquisition (110) de données de répartition, apte à :

      ▪ calculer une donnée de répartition des participants audit rassemblement se référant à un mouvement de personnes, correspondant à une quantité en entrée et en sortie dudit emplacement géographique ou d'une partie dudit emplacement géographique, à partir de premières données de répartition de participant se référant à une quantité de personnes générées à partir de données de dispositifs d'acquisition d'image et de données de capteurs réseau, et
      ▪ enregistrer la donnée de répartition des participants audit rassemblement se référant à un mouvement de personnes,

   - un module de calcul (120) de besoins, apte à déterminer les installations nécessitant une action d'entretien à partir de la donnée de répartition,
   - un module de gestion (140) des ressources d'entretien, configuré pour générer une information, de préférence en temps réel, sur la répartition des ressources d'entretien,
   - un module de distribution (130) des ressources, configuré pour établir des associations entre les ressources d'entretien (30) et les installations nécessitant une action d'entretien de façon à gérer l'entretien de l'emplacement géographique au cours dudit rassemblement de masse, et
   - un module d'analyse (190), configuré pour générer des données analysées à partir desdites associations de façon à permettre une gestion dynamique de l'entretien de l'emplacement géographique.

2. Système selon la revendication 1, **caractérisé en ce que** le système comporte un ou plusieurs capteurs (20) sélectionnés parmi : un dispositif de relève de la consommation, un dispositif de relève de l'usure des installations, un dispositif de relève de la propreté des installations, un dispositif de relève de position géographique et un dispositif de relève d'incidents.

3. Système selon la revendication 1 ou 2, **caractérisé en ce que** le module de calcul (120) de besoins est configuré pour utiliser des données complémentaires pour déterminer les installations nécessitant une action d'entretien, lesdites données complémentaires étant sélectionnées parmi :

   - des données de mesure de l'état de l'installation générées par un ou plusieurs capteurs (20) positionnés dans l'installation et configurés pour mesurer l'état de l'installation,
   - des données relatives aux actions d'entretien antérieures stockées sur un module d'enregistrement (150),
   - des données de seuils prédéterminés d'intervention enregistrées dans un référentiel (50), et/ou
   - des données relatives au rassemblement de masse enregistrées dans un référentiel (50).

4. Système selon l'une quelconque des revendications 1 à 3, **caractérisé en ce que** le module de calcul (120) de besoins est configuré en outre pour :

   - recevoir des informations d'état d'installations en provenance d'un ou de plusieurs capteurs (20) positionnés dans chacune d'une ou de plusieurs installations,
   - recevoir la donnée de répartition des participants audit rassemblement, et
   - déterminer les installations nécessitant une action d'entretien à partir des informations d'état de d'installations et de la donnée de répartition des personnes.

5. Système selon l'une quelconque des revendications 1 à 4, **caractérisé en ce que** le module de calcul (120) de besoins est configuré en outre pour générer une liste comportant l'état de chacune des installations.

6. Système selon l'une quelconque des revendications 1 à 5, **caractérisé en ce que** le module de gestion (140) des ressources est configuré en outre pour identifier une période d'inactivité prolongée d'une ressource d'entretien (30).

7. Système selon l'une quelconque des revendications 1 à 6, **caractérisé en ce que** le module de gestion (140) des ressources est en outre configuré pour calculer, en temps réel, un taux de surcharge en ressource d'entretien sur une partie de l'emplacement géographique, ledit module de gestion des ressources étant alors configuré pour :

   - Recevoir une donnée sur la répartition des participants audit rassemblement de masse sur ladite zone,
   - Recevoir une donnée sur la répartition des ressources d'entretien sur ladite zone,
   - Recevoir une donnée sur la capacité d'accueil de ladite zone, et
   - Calculer un taux de surcharge en ressource d'entretien à partir des données de répartition des participants, de répartition des ressources d'entretien et de la capacité d'accueil.

8. Système selon l'une quelconque des revendications 1 à 7, **caractérisé en ce que** le module de gestion (140) des ressources est configuré pour :

   - Recevoir une donnée relative au risque de dépassement de la capacité d'une zone,
   - Recevoir une donnée sur la répartition des ressources d'entretien notamment dans ladite zone,
   - Envoyer un message d'alerte sur les dispositifs personnels des agents d'entretien présent dans ladite zone.

9. Système selon l'une quelconque des revendications 1 à 8, **caractérisé en ce que** la plateforme (100) analytique est apte à communiquer avec un dispositif portable (40) d'entretien comprenant un dispositif d'affichage (41), ledit dispositif portable (40) étant configuré de façon à afficher : au moins une information sur les installations nécessitant une action d'entretien et/ou un parcours depuis la position actuelle jusqu'à une installation nécessitant une action d'entretien.

10. Système selon l'une quelconque des revendications 1 à 9, **caractérisé en ce que** la plateforme (100) analytique comporte en outre un module d'enregistrement (150) apte à enregistrer les données reçues et/ou générées par la plateforme et à apte à gérer une historisation desdites données.

11. Système selon l'une quelconque des revendications 1 à 10, **caractérisé en ce que** la plateforme (100) analytique comporte en outre un module d'apprentissage (160) apte à mettre en oeuvre un modèle d'apprentissage supervisé ou non supervisé de façon à générer des données prédictives sélectionnées parmi : des données prédites de répartition de participants audit rassemblement, des données prédites de l'état des installations, des données prédites de besoins en actions d'entretien, des données prédites de position des ressources d'entretien et des données prédites de consommation des ressources.

12. Système selon l'une quelconque des revendications 1 à 11, **caractérisé en ce que** le module d'analyse (190) configuré pour générer, à partir des données historisées, des données analysées sélectionnées parmi les données analysées suivantes : liste des actions d'entretien les plus fréquentes ou les plus consommatrices en terme de ressources d'entretien, liste des installations les plus consommatrices en terme de ressources d'entretien, répartition réelle ou prédite des participants audit rassemblement en fonction du temps, besoins réels ou prédits en actions d'entretien en fonction du temps, position réelle ou prédite des ressources d'entretien en fonction du temps, et consommations réelles ou prédites des ressources.

13. Système selon l'une quelconque des revendications 1 à 12, **caractérisé en ce que** la plateforme (100) analytique comporte en outre un module de supervision (170), comprenant un dispositif d'affichage, permettant une supervision temps-réel des ressources d'entretien, et configuré pour afficher : au moins une information sur les installations nécessitant une action d'entretien, les installations qui sont en cours d'entretien, les installations qui ont été entretenues et/ou une liste de ressources d'entretien disponibles.

14. Procédé de gestion (2) de l'entretien d'un emplacement géographique, comportant une pluralité d'installations, par une pluralité de ressources d'entretien (30) au cours d'un rassemblement de masse, ledit procédé comportant particulier les étapes suivantes :

- détermination (200), par un module d'acquisition (110) de données de répartition, d'une donnée de répartition des participants audit rassemblement se référant à un mouvement de personnes, correspondant à une quantité en entrée et en sortie dudit emplacement géographique ou d'une partie dudit emplacement géographique, à partir de premières données de répartition de participant se référant à une quantité de personnes, générées à partir de données de dispositifs d'acquisition d'image et de données de capteurs réseau,
- enregistrement (300), par un module d'acquisition (110) de données de répartition, d'une donnée de répartition des participants audit rassemblement, la donnée de répartition se référant à un mouvement de personnes,
- détermination (400), par un module de calcul (120) de besoins, des installations nécessitant une action d'entretien en fonction de la donnée de répartition des participants audit rassemblement, et
- établissement (500), par un module de distribution (130) des ressources, d'associations entre des ressources d'entretien (30) et les installations nécessitant une action d'entretien.

**Patentansprüche**

1. System (1) zur dynamischen Wartungsverwaltung eines geografischen Ortes während einer Massenansammlung, wobei der geografische Ort eine Vielzahl von Anlagen aufweist, wobei das System geeignet ist, mit einer Vielzahl von Wartungsressourcen (30) zu kommunizieren, die an der Wartung des geografischen Ortes beteiligt sind, wobei das System (1) eine analytische Plattform (100) aufweist, die Folgendes umfasst:

- ein Erfassungsmodul (110) von Verteilungsdaten, das geeignet ist zum:

■ Berechnen eines Datenelements für die Verteilung der Teilnehmer der Ansammlung, das sich auf eine Bewegung von Personen bezieht, die einer Menge am Eingang und am Ausgang des geografischen Ortes oder eines Teils des geografischen Ortes entspricht, aus ersten Teilnehmerverteilungsdaten, die sich auf eine Menge von Personen beziehen, die aus Daten von Bilderfassungsvorrichtungen und Daten von Netzwerksensoren generiert wurden, und
■ Aufzeichnen des Datenelements für die Verteilung der Teilnehmer der Ansammlung, das sich auf eine Bewegung von Personen bezieht,

- ein Bedarfsberechnungsmodul (120), das geeignet ist, anhand des Verteilungsdatenelements die Anlagen zu bestimmen, die eine Wartungsmaßnahme benötigen,
- ein Verwaltungsmodul (140) für Wartungsressourcen, das konfiguriert ist, um eine Information, vorzugsweise in Echtzeit, über die Verteilung der Wartungsressourcen zu generieren,
- ein Ressourcenverteilungsmodul (130), das konfiguriert ist, um Zuordnungen zwischen den Wartungsressourcen (30) und den Anlagen, die eine Wartungsmaßnahme erfordern, herzustellen, um die Wartung des geografischen Ortes während der genannten Massenansammlung zu verwalten, und

- ein Analysemodul (190), das konfiguriert ist, um aus den genannten Zuordnungen analysierte Daten derart zu generieren, dass eine dynamische Verwaltung der Wartung des geografischen Ortes ermöglicht wird.

2. System nach Anspruch 1, **dadurch gekennzeichnet, dass** das System einen oder mehrere Sensoren (20) aufweist, die ausgewählt sind aus: einer Vorrichtung zur Ermittlung des Verbrauchs, einer Vorrichtung zur Ermittlung des Anlagenverschleißes, einer Vorrichtung zur Ermittlung der Anlagensauberkeit, einer Vorrichtung zur Ermittlung der geografischen Position und einer Vorrichtung zur Ermittlung von Störfällen.

3. System nach Anspruch 1 oder 2, **dadurch gekennzeichnet, dass** das Bedarfsberechnungsmodul (120) konfiguriert ist, um zusätzliche Daten zu nutzen, um die Anlagen zu bestimmen, die eine Wartungsmaßnahme benötigen, wobei die zusätzlichen Daten ausgewählt sind aus:

   - Messdaten über den Zustand der Anlage, die von einem oder mehreren Sensoren (20) generiert werden, die in der Anlage positioniert und konfiguriert sind, um den Zustand der Anlage zu messen,
   - Daten über frühere Wartungsmaßnahmen, die auf einem Aufzeichnungsmodul (150) gespeichert sind,
   - vorgegebene Eingriffsschwellendaten, die in einem Repository (50) aufgezeichnet sind, und/oder
   - Daten über die Massenansammlung, die in einem Repository (50) aufgezeichnet sind.

4. System nach einem der Ansprüche 1 bis 3, **dadurch gekennzeichnet, dass** das Bedarfsberechnungsmodul (120) ferner konfiguriert ist zum:

   - Empfangen von Anlagenzustandsinformationen von einem oder mehreren Sensoren (20), die in jeder von einer oder mehreren Anlagen positioniert sind,
   - Empfangen des Datenelements für die Verteilung der Teilnehmer der Ansammlung, und
   - Bestimmen, anhand der Informationen über den Anlagenzustand und des Personenverteilungsdatenelements, der Anlagen, die gewartet werden müssen.

5. System nach einem der Ansprüche 1 bis 4, **dadurch gekennzeichnet, dass** das Bedarfsberechnungsmodul (120) weiterhin konfiguriert ist, um eine Liste zu generieren, die den Zustand jeder der Anlagen enthält.

6. System nach einem der Ansprüche 1 bis 5, **dadurch gekennzeichnet, dass** das Ressourcenverwaltungsmodul (140) weiterhin konfiguriert ist, um eine Periode längerer Inaktivität einer Wartungsressource (30) zu identifizieren.

7. System nach einem der Ansprüche 1 bis 6, **dadurch gekennzeichnet, dass** das Ressourcenverwaltungsmodul (140) weiterhin konfiguriert ist, um in Echtzeit eine Überlastungsrate an Wartungsressourcen über einen Teil des geografischen Ortes zu berechnen, wobei das Ressourcenverwaltungsmodul dann konfiguriert ist zum:

   - Empfangen eines Datenelements für die Verteilung der Teilnehmer der Massenansammlung in dem Gebiet,
   - Empfangen eines Datenelements für die Verteilung der Wartungsressourcen in dem Gebiet,
   - Empfangen eines Datenelements für die Aufnahmekapazität des Gebiets, und
   - Berechnen einer Überlastungsrate an Wartungsressourcen aus den Daten zur Verteilung der Teilnehmer, der Verteilung der Wartungsressourcen und der Aufnahmekapazität.

8. System nach einem der Ansprüche 1 bis 7, **dadurch gekennzeichnet, dass** das Ressourcenverwaltungsmodul (140) konfiguriert ist zum:

   - Empfangen eines Datenelements über das Risiko einer Kapazitätsüberschreitung des Gebiets,
   - Empfangen eines Datenelements für die Verteilung der Wartungsressourcen vor allem in dem Gebiet,
   - Senden einer Warnmeldung an die persönlichen Vorrichtungen der Wartungskräfte, die sich in diesem Gebiet befinden.

9. System nach einem der Ansprüche 1 bis 8, **dadurch gekennzeichnet, dass** die analytische Plattform (100) geeignet ist, mit einer tragbaren Wartungsvorrichtung (40) zu kommunizieren, die eine Anzeigevorrichtung (41) umfasst, wobei die tragbare Vorrichtung (40) konfiguriert ist, um Folgendes anzuzeigen: mindestens eine Information über die Anlagen, die eine Wartungsmaßnahme erfordern, und/oder einen Weg von der aktuellen Position zu einer Anlage, die eine Wartungsmaßnahme erfordert.

10. System nach einem der Ansprüche 1 bis 9, **dadurch gekennzeichnet, dass** die analytische Plattform (100) außerdem ein Aufzeichnungsmodul (150) umfasst, das geeignet ist, die von der Plattform empfangenen und/oder generierten Daten aufzuzeichnen, und geeignet ist, eine Historisierung dieser Daten zu verwalten.

**11.** System nach einem der Ansprüche 1 bis 10, **dadurch gekennzeichnet, dass** die analytische Plattform (100) weiterhin ein Lernmodul (160) aufweist, das dazu geeignet ist, ein Modell für überwachtes oder nicht überwachtes Lernen zu implementieren, um Vorhersagedaten zu generieren, die ausgewählt sind aus: vorhergesagten Daten zur Verteilung der Teilnehmer der Ansammlung, vorhergesagten Daten über den Zustand der Anlagen, vorhergesagten Daten zum Bedarf an Wartungsmaßnahmen, vorhergesagten Daten zur Position der Wartungsressourcen und vorhergesagten Daten zum Verbrauch von Ressourcen.

**12.** System nach einem der Ansprüche 1 bis 11, **dadurch gekennzeichnet, dass** das Analysemodul (190) konfiguriert ist, um aus den historisierten Daten analysierte Daten zu generieren, die aus den folgenden analysierten Daten ausgewählt sind: Liste der häufigsten Wartungsmaßnahmen oder der Wartungsmaßnahmen mit dem größten Verbrauch an Wartungsressourcen, Liste der Anlagen mit dem größten Verbrauch an Wartungsressourcen, tatsächliche oder vorhergesagte Verteilung der Teilnehmer der Ansammlung in Abhängigkeit von der Zeit, tatsächlicher oder vorhergesagter Bedarf an Wartungsmaßnahmen in Abhängigkeit von der Zeit, tatsächliche oder vorhergesagte Position der Wartungsressourcen in Abhängigkeit von der Zeit und tatsächlicher oder vorhergesagter Verbrauch von Ressourcen.

**13.** System nach einem der Ansprüche 1 bis 12, **dadurch gekennzeichnet, dass** die analytische Plattform (100) weiterhin ein Überwachungsmodul (170) mit einer Anzeigevorrichtung umfasst, die eine Echtzeit-Überwachung der Wartungsressourcen ermöglicht und konfiguriert ist, um Folgendes anzuzeigen: mindestens eine Information über die Anlagen, die eine Wartungsmaßnahme erfordern, die Anlagen, die gerade gewartet werden, die Anlagen, die gewartet wurden, und/oder eine Liste verfügbarer Wartungsressourcen.

**14.** Verfahren zum Verwalten (2) der Wartung eines geografischen Ortes, der eine Vielzahl von Anlagen umfasst, durch eine Vielzahl von Wartungsressourcen (30) während einer Massenansammlung, wobei das Verfahren insbesondere die folgenden Schritte aufweist:

- Bestimmen (200), durch ein Erfassungsmodul (110), von Verteilungsdaten, eines Datenelements für die Verteilung der Teilnehmer der Ansammlung, das sich auf eine Bewegung von Personen bezieht, die einer Menge am Eingang und am Ausgang des geografischen Ortes oder eines Teils des geografischen Ortes entsprechen, aus ersten Teilnehmerverteilungsdaten, die sich auf eine Menge von Personen beziehen, die aus Daten von Bilderfassungsvorrichtungen und Daten von Netzwerksensoren generiert wurde,
- Aufzeichnen (300), durch ein Erfassungsmodul (110), von Verteilungsdaten, eines Datenelements für die Verteilung der Teilnehmer der Ansammlung, wobei sich die Verteilungsdaten auf eine Bewegung von Personen beziehen,
- Bestimmung (400), durch ein Bedarfsberechnungsmodul (120), der Anlagen, die eine Wartungsmaßnahme erfordern, in Abhängigkeit vom Datenelement zur Verteilung der Teilnehmer der Ansammlung, und
- Erstellung (500), durch ein Ressourcenverteilungsmodul (130), von Zuordnungen zwischen Wartungsressourcen (30) und Anlagen, die eine Wartungsmaßnahme erfordern.

**Claims**

**1.** A dynamic management system (1) of the maintenance of a geographic location during a mass gathering, said geographic location comprising a plurality of installations, said system being capable of communicating with a plurality of maintenance resources (30) involved in the maintenance of the geographic location, said system (1) comprising an analytical platform (100) comprising:

- an acquisition module (110) of distribution data able to:

  ▪ calculate a distribution datum of participants at said gathering referring to a movement of people, corresponding to an entry and an exit number of said geographic location or of a part of said geographic location, from first distribution data of participants referring to a number of people generated from data from image acquisition devices and data from network sensors, and
  ▪ record a distribution datum of participants at said gathering referring to a movement of people,

- a calculation module (120) of needs able to determine the installations requiring maintenance action from the distribution datum,
- a maintenance resource management module (140) configured to generate an item of information, preferably in real time, on the distribution of maintenance resources,
- a resources distribution module (130) configured to set up associations between the maintenance resources (30) and the installations requiring maintenance action so as to manage the maintenance of the geographic location during said mass gathering, and

- an analysis module (190) configured to generate analysed data from said associations so as to allow dynamic maintenance management of the geographic location.

2. The system according to claim 1, **characterized in that** the system comprises one or more sensors (20) selected from a backup device of consumption, a backup device of wear on installations, a backup device of cleanliness of installations, a backup device of geographic position and a backup device of incidents.

3. The system according to any one of claims 1 or 2, **characterized in that** the calculation module (120) of needs is configured to use complementary data to determine installations requiring maintenance action, said complementary data being selected from:

- measurement data of the state of the installation generated by one or more sensors (20) positioned in the installation and configured to measure the state of the installation,
- data relative to former maintenance actions stored on a recording module (150),
- data of predetermined intervention thresholds recorded in a repository (50), and/or
- data relative to the mass gathering recorded in a repository (50).

4. The system according to any one of claims 1 to 3, **characterized in that** the calculation module (120) of needs is further configured to:

- receive information on the state of installations originating from one or more sensors (20) positioned in each of one or more installations,
- receive the distribution datum of participants at said gathering, and
- determine the installations requiring maintenance action from information on the state of installations and of the distribution datum of people.

5. The system according to any one of claims 1 to 4, **characterized in that** the calculation module (120) of needs is further configured to generate a list comprising the state of each of the installations.

6. The system according to any one of claims 1 to 5, **characterized in that** the management module (140) is further configured to identify a period of prolonged inactivity of a maintenance resource (30).

7. The system according to any one of claims 1 to 6, **characterized in that** the management module (140) of resources is further configured to calculate, in real time, a surcharge rate for maintenance resources on a part of the geographic location, said management module of resources being configured to:

- receive a datum on the distribution of participants at said mass gathering on said part of the geographic location,
- receive a datum on the distribution of maintenance resources on said part of the geographic location,
- receive a datum on the reception capacity of said part of the geographic location, and
- calculate a surcharge rate for maintenance resources from distribution data of participants, distribution of maintenance resources and reception capacity

8. The system according to any one of claims 1 to 7, **characterized in that** the management module (140) of resources is configured to:

- receive a datum relative to the risk of exceeding the capacity of a zone,
- receive a datum on the distribution of maintenance resources especially in said zone,
- send an alert message to the personal devices of maintenance technicians present in said zone.

9. The system according to any one of claims 1 to 8, **characterized in that** the analytical platform (100) is capable of communicating with a portable maintenance device (40) comprising a display device (41), said portable device (40) being configured so as to display at least one item of information on the installations requiring maintenance action and/or a path from the current position to an installation requiring maintenance action.

10. The system according to any one of claims 1 to 9, **characterized in that** the analytical platform (100) further comprises a recording module (150) able to record the data received and/or generated by the platform and able to manage a historical record of said data.

11. The system according to any one of claims 1 to 10, **characterized in that** the analytical platform (100) further comprises a learning module (160) able to execute a supervised or non-supervised learning model so as to generate predictive data selected from : predicted data on distribution of participants at said gathering, predicted data of the state of installations, predicted data of needs of maintenance actions, predicted data of position of maintenance resources and predicted data of consumption of resources.

12. The system according to any one of claims 1 to 11, **characterized in that** the analysis module (190) is configured to generate, from historical data, analysed data selected from the following analysed data: list of the most frequent maintenance actions or using the most energy in terms of maintenance resources, list of installations using the most energy in terms of maintenance resources, real or predicted distribution of participants at said gathering as a function of time, real or predicted needs of maintenance actions as a function of time, real or predicted position of maintenance resources as a function of time, and real or predicted consumption of resources.

13. The system according to any one of claims 1 to 12, **characterized in that** the analytical platform (100) further comprises a supervision module (170), comprising a display device allowing real-time supervision of maintenance resources, and configured to display at least one item of information on the installations requiring maintenance action, the installations which are under maintenance, the installations which have been maintained and/or a list of available maintenance resources.

14. A management process (2) of the maintenance of a geographic location, comprising a plurality of installations, by a plurality of maintenance resources (30) during a mass gathering, said process comprising in particular the following steps:

   - determination (200), by an acquisition module (110) of distribution data, of a distribution datum of participants at said gathering referring to a movement of people, corresponding to an entry and an exit number of said geographic location or of a part of said geographic location, from first distribution data referring to a number of people generated from data from image acquisition devices and data from network sensors, and
   - recording (300) by said acquisition module (110) of distribution data, of a distribution datum of participants at said gathering, said distribution datum referring to a movement of people,
   - determination (400), by a calculation module (120) of needs, of installations requiring maintenance action as a function of the distribution datum of participants at said gathering, and
   - setting up (500), by a distribution module (130) of resources, of associations between maintenance resources (30) and the installations requiring maintenance action.

**FIG. 1**

**FIG. 2**

2

200 — Détermination d'une donnée de répartition des personnes présentes audit rassemblement

300 — Enregistrement d'une donnée de répartition des personnes présentes audit rassemblement

400 — Détermination des installations nécessitant une action d'entretien en fonction de la donnée de répartition des personnes

500 — Etablissement d'associations entre des ressources et les installations nécessitant une action d'entretien

600 — Mise en œuvre d'un algorithme issu d'un modèle d'apprentissage supervisé ou non supervisé

700 — Analyse post-entretien de la performance de l'action d'entretien

**FIG. 3**

**FIG. 4**

**FIG. 5**

**FIG. 6**

**FIG. 7**

**FIG. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140236650 A

**Littérature non-brevet citée dans la description**

- **BURGES.** A Tutorial on Support Vector Machines for Pattern Recognition. *Data Mining and Knowledge Discovery,* 1998
- **BRIEMAN.** Random Forests. *Machine Learning,* 2001
- **ROSENBLATT.** *The perceptron: a probabilistic model for information storage and organization in the brain,* 1958